# EUROPÄISCHE PATENTSCHRIFT

(11) **EP 2 055 969 B1**
(45) Veröffentlichungstag und Bekanntmachung des Hinweises auf die Patenterteilung: **21.12.2011**
(21) Anmeldenummer: 08105579.0
(22) Anmeldetag: 15.10.2008
(51) Int. Cl.: F16B 25/00, F16B 33/06

(54) **Schraube**
Screw
Vis

(30) Priorität: 31.10.2007 DE 102007000606
(43) Veröffentlichungstag der Anmeldung: 06.05.2009
(73) Patentinhaber: HILTI Aktiengesellschaft, 9494 Schaan (LI)
(72) Erfinder: Huber, Franz, 86865, Markt Wald (DE); Oppeneiger, Simon, 6973, Hoechst (AT)
(74) Vertreter: Söllner, Oliver

(56) Entgegenhaltungen:
- EP-A1- 1 655 498
- WO-A1-2004/074697

## Beschreibung

Die Erfindung betrifft eine Schraube mit einem Schaft und mit einem wenigstens bereichsweise umfänglich an dem Schaft angeordneten Gewinde, das eine Schraubenlinie definiert, wobei in Aussparungen des Gewindes Schneidkörper aus einem Werkstoff angeordnet sind, dessen Härte grösser als die Härte des Gewindes ist.

Derartige Schrauben werden direkt in ein zuvor in einem Untergrund erstelltes Bohrloch eingeschraubt, wobei das Gewinde der Schraube ein Gegengewinde beziehungsweise einen Hinterschnitt in den Untergrund furcht beziehungsweise schneidet.

Für Aussenanwendungen werden die Schrauben, wie Betonschrauben, vorteilhaft aus einem korrosionsbeständigen Material, beispielsweise aus korrosionsbeständigen Stahlwerkstoffen hergestellt. Derartige Materialien weisen jedoch oftmals eine Härte auf, die für ein Furchen eines mineralischen Untergrundes nicht ausreicht, so dass das z. B. einstückig mit dem Schaft ausgebildete Gewinde der Schraube beim Einschrauben verschleisst. Eine Härtung der Schraube oder des Gewindes ist bei korrosionsbeständigen Materialien nur bedingt möglich.

Aus der DE 198 52 338 A1 ist eine Schraube aus rostfreiem Stahl bekannt, dessen Schaft und Gewinde mit nach aussen offenen Aufnahmebohrungen zur Aufnahme von Schneidkörpern in Form von zylindrischen Schneideinsatz-Stiften aus gehärtetem Stahl vorgesehen ist, die das Einschneiden in einen harten, mineralischen Untergrund, wie beispielsweise Beton oder Mauerwerk erleichtern. Die Schneideinsatz-Stifte weisen eine Längserstreckung auf und sind derart in den Aufnahmebohrungen angeordnet, dass deren Längsachse jeweils radial nach aussen verläuft. Die Schneideinsatz-Stifte sind in Einschraubrichtung formschlüssig und in radialer Richtung reibschlüssig in den Aufnahmebohrungen im Schaft gehalten.

Nachteilig an der bekannten Lösung ist, dass die Schneideinsatz-Stifte jeweils im gleichen Mass die Querschnitt-Projektionsfläche des Gewindes überragen und die Fertigung dieser Schraube sehr aufwendig ist, da die Vielzahl von Schneideinsatz-Stiften einzeln nachbearbeitet werden müssen. Zudem stehen die zylindrischen Schneideinsatz-Stifte derart über die Querschnitts-Projektionsfläche des Gewindes vor, dass der erzeugte Hinterschnitt insbesondere in einem mineralischen Untergrund aufgrund seiner Inhomogenität für das nachfolgende Gewinde zu gross ist, was das Lastniveau der gesetzten Schraube senkt. Des Weiteren erzeugen die Schneideinsatz-Stifte gemäss der DE 198 52 338 A1 einen hohen Eindrehwiderstand, der insbesondere bei kleineren Durchmessern der Schraube ein einwandfreies Setzen der gewindefurchenden Schraube erschwert oder gar verunmöglicht..

Weitere gewindeschneidende Schrauben, bei denen im Gewinde Schneidelemente angeordnet sind, sind aus der EP 1 655 498 A1 und der WO 2004/074697 A bekannt. Gemäss EP 1 655 498 A1 sind die Schneidelemente als Schweissgut ausgebildet. Gemäss WO 2004/074697 A sind etwa wannenförmige Schneidelemente vorgesehen.

Aufgabe der Erfindung ist es, eine gewindefurchende Schraube zu schaffen, die das Setzen der Schraube in harten Untergründen, wie z. B. Beton, verbessert und die einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung sind die Schneidkörper innerhalb und/oder quer zu einer von der Schraubenlinie eingeschlossenen Ebene zur betreffenden Tangente der Schraubenlinie geneigt angeordnet und mit einer entlang der Schraubenlinie ausgerichteten Längserstreckung derart ausgerichtet, dass ihre Längsachse mit der betreffenden Tangente der Schraubenlinie einen Winkel von -35° bis +35° einschliesst.

Durch die winklige Anordnung der Schneidkörper werden Druckspitzen auf die die Querschnitts-Projektionsfläche zumindest bereichsweise überragenden Schneidkörper massgeblich reduziert, was eine vorteilhafte Ausbildung des Hinterschnitts beziehungsweise des Gegengewindes im Untergrund gewährleistet. Die Druckspitzen an den Schneidkörpern, welche örtlich die Druckfestigkeit des mineralischen Untergrundes übersteigen, führen zu einer örtlich begrenzten Zerstörung des Untergrundes, was zu einem derart vergrösserten Abbau von Untergrundmaterial führt, dass das in den erzeugten Hinterschnitt eingreifende Gewinde in diesem Bereich keine oder nur beschränkt Last übertragen kann. Für mineralische Untergründe entspricht der eingeschlossene Winkel der Längsachse der Schneidkörper mit der betreffenden Tangente der Schraubenlinie besonders vorteilhaft -20° bis +20°.

Des Weiteren wird durch die winklige Anordnung der Schneidkörper das abzubauende Untergrundmaterial wie mit einem Schneepflug entfernt. Dieser "Schneepflug-Effekt" zwingt das abgebaute Untergrundmaterial in Richtung des Schaftaussendurchmessers, wodurch der Energieaufwand zum Einschrauben der Schraube gesenkt ist. Dies führt zudem zu einer besseren Bohrmehlverpressung zwischen dem Schaftaussendurchmesser und der Bohrlochwandung, wodurch das Lastvermögen der gesetzten Schraube gegenüber einer bisher bekannten Schraube erhöht ist.

Mineralische Untergründe wie Beton weisen Bewehrungseisen auf, die gegebenenfalls im Bereich des Bohrlochs liegen. Durch die winklige Anordnung der harten Schneidkörper ist der Vorschub der Schraube auch bei einem Bewehrungseisentreffer gewährleistet.

Die Schneidkörper sind vorteilhaft aus einem Hartmetall gefertigt und sind weiter vorteilhaft in das Gewinde beispielsweise mit einem Widerstandsschweissverfahren eingeschweisst.

Die erfindungsgemässe Schraube weist neben dem besseren Eindrehverhalten bei Bewehrungseisentreffem zudem aufgrund der gegenüber einer bisher bekannten Schraube niedrigeren Eindrehmomente eine kürzere Setzzeit sowie eine höhere Setzwahrscheinlichkeit auch bei kleineren Bohrereckmassen auf.

Gemäss einer ersten Erfindungsalternative sind die Schneidkörper innerhalb einer von der Schraubenlinie eingeschlossenen Ebene zur betreffenden Tangente der Schraubenlinie geneigt angeordnet, so dass der Schneidkörper zumindest teilweise über den Verlauf der radialen Aussenkontur beziehungsweise über die Querschnitts-Projektionsfläche des Gewindes ragt. Unter einer positiven Neigung wird hier eine Neigung der Längsachse des Schneidkörpers dem Schaftaussendurchmesser zugewandt in Bezug auf die Richtung der Schraubenlinie vom Gewindeanfang ausgehend verstanden. Entsprechend ist eine negative Neigung eine Neigung der Längsachse des Schneidkörpers von dem Schaftaussendurchmesser weg gerichtet in Bezug auf die Richtung der Schraubenlinie vom Gewindeanfang ausgehend.

Gemäss einer zweiten Erfindungsalternative sind die Schneidkörper quer zu einer von der Schraubenlinie eingeschlossenen Ebene zur betreffenden Tangente der Schraubenlinie geneigt angeordnet, so dass der Schneidkörper zumindest teilweise seitlich über die Querschnitts-Projektionsfläche des Gewindes ragt. Unter einer positiven Neigung wird hier eine Neigung der Längsachse des Schneidkörpers quer zur Schraubenlinie in Bezug auf die Längserstreckung der zumindest einen Flanke des Gewindes vom Gewindeanfang weg verstanden. Entsprechend ist eine negative Neigung eine Neigung der Längsachse des Schneidkörpers quer zur Schraubenlinie in Bezug auf die Längserstreckung der zumindest einen Flanke des Gewindes zu dem Gewindeanfang hin.

Gemäss einer dritten Erfindungsalternative sind die Schneidkörper innerhalb und quer zu der von der Schraubenlinie eingeschlossenen Ebene zur betreffenden Tangente der Schraubenlinie geneigt angeordnet.

Vorzugsweise sind entlang des Gewindes nacheinander angeordnete Schneidkörper unter Einschluss unterschiedlicher Winkel geneigt angeordnet. Neben einer Anordnung der Schneidkörper, bei der alle Schneidkörper im gleichen Winkel und in der gleichen Ausrichtung vorgesehen sind, ist ebenfalls eine Anordnung der Schneidkörper vorteilhaft, bei

der aufeinanderfolgende Schneidkörper unterschiedlich insbesondere quer zu der von der Schraubenlinie eingeschlossenen Ebene zur betreffenden Tangente der Schraubenlinie geneigt ausgerichtet sind. Durch die unterschiedlichen Ausrichtungen der Schneidkörper ist eine Verschränkung der Schneidkanten beziehungsweise der Schneidflächen der Schneidkörper gegeben, was einen vorteilhaften Abbau von Untergrundmaterial im Bohrloch und somit einen vorteilhaften Hinterschnitt gewährleistet. Vorteilhaft sind die verschiedenen ausgerichteten, nacheinander angeordneten Schneidkörper alternierend angeordnet, was ein vorteilhaftes Einschneidverhalten des mit den Schneidkörpern besetzten Bereiches des Gewindes gewährleistet.

Die Erfindung wird nachstehend anhand von Ausführungsbeispielen näher erläutert. Es zeigen:
- Fig. 1: Eine Schraube in Seitenansicht;
- Fig. 2A-C: drei Varianten einer Ausrichtung eines Schneidkörpers in jeweils einem Teilschnitt entlang der Linie II-II in Fig. 1; und
- Fig. 3A+B: zwei Varianten der Ausrichtung von jeweils zwei Schneidkörpern jeweils in einer Aufsicht auf das Gewinde.

Grundsätzlich sind in den Figuren gleiche Teile mit den gleichen Bezugszeichen versehen.

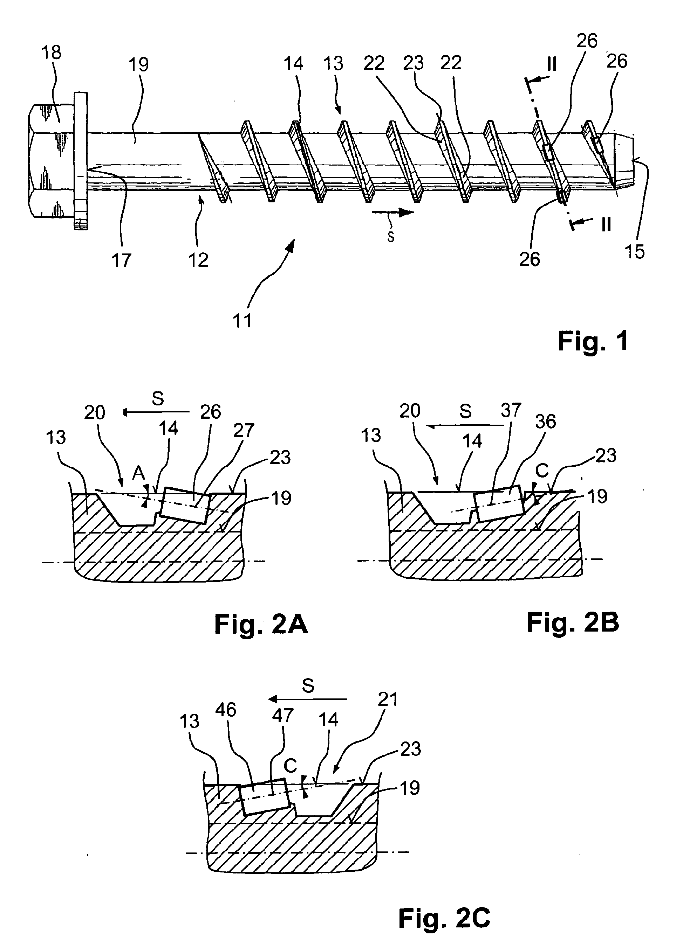

Die in der Figur 1, 2A und 3A dargestellte Schraube 11 weist einen Schaft 12 und ein einstückig mit dem Schaft 12 ausgebildetes und bereichsweise umfänglich an diesem angeordnetes Gewinde 13 auf, das eine Schraubenlinie 14 definiert und eine radiale Aussenkontur 23 und zwei seitliche Flanken 22 aufweist. Das Gewinde 13 erstreckt sich von einem freien Ende 15 des Schafts 12 mit einem Gewindeanfang 16 über einen Bereich des Schafts 12 in Richtung eines zweiten Endes 17 des Schafts 12 an dem ein Sechskant-Schraubenkopf als Drehangriffsmittel 18 vorgesehen ist. Der Pfeil S zeigt in den Figuren jeweils die Einschraubrichtung der Schraube 11 an.

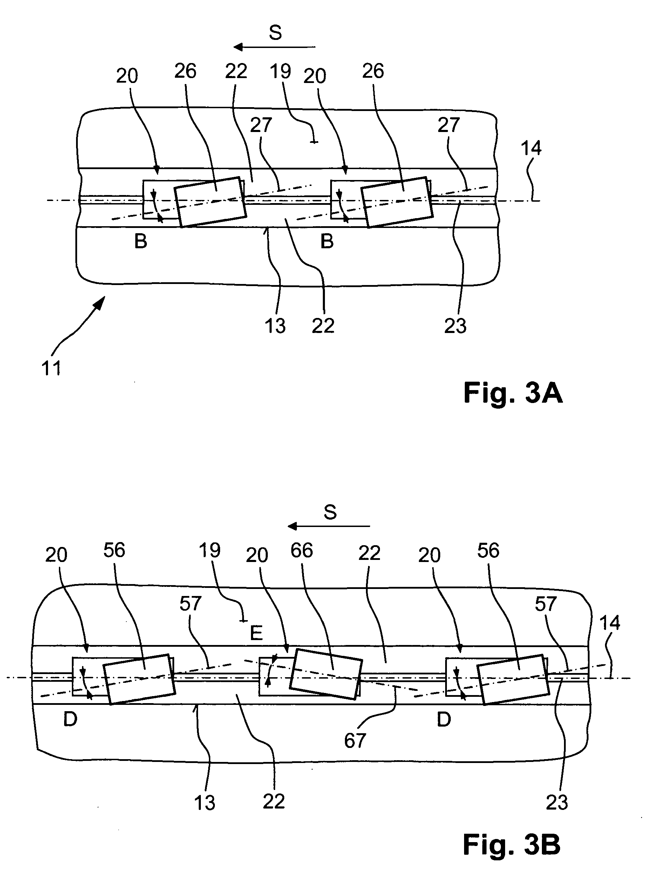

In Aussparungen 20 des Gewindes 13 sind mehrere zylindrische Schneidkörper 26 aus einem Werkstoff angeordnet, dessen Härte grösser als die Härte des Gewindes 13 ist. Die Aussparungen 20 erstrecken sich ausgehend von der radialen Aussenkontur 23 des Gewindes 13 in Richtung der Schaftaussenseite 19 des Schafts 12, ohne in den Schaft 12 einzudringen. In Richtung des Gewindeanfangs 16 gesehen, bildet die Aussparung 20 vor dem Schneidkörper 26 einen Spanraum für Bohrmehl und Bohrklein aus. Die Schneidkörper 26 mit einer entlang der Schraubenlinie 14 ausgerichteten Längserstreckung sind derart ausgerichtet, dass ihre Längsachse 27 mit der betreffenden Tangente der Schraubenlinie 14 einen Winkel von -35° bis +35° einschliesst. Wie in Figur 2A dargestellt, schliesst die Längsachse 27 des Schneidkörpers 26 innerhalb einer von der Schraubenlinie 14 eingeschlossenen Ebene zur betreffenden Tangente der Schraubenlinie 14 einen Winkel A von +15° und quer zu der von der Schraubenlinie 14 eingeschlossenen Ebene mit der betreffenden Tangente der Schraubenlinie 14 einen Winkel B von +20° ein. Wie insbesondere in Figur 3A dargestellt, sind die Schneidkörper 26 alle gleich und in der Aufsicht auf das Gewinde 13 in Richtung des Gewindeanfangs 16 des Gewindes 13 hin ausgerichtet.

Bei der in der Figur 2B dargestellten Variante der Anordnung eines Schneidkörpers 36 ist dieser gegenüber dem Schneidkörper 26 entgegengesetzt geneigt, wobei die Längsachse 27 des Schneidkörpers 26 innerhalb einer von der Schraubenlinie 14 eingeschlossenen Ebene mit der betreffenden Tangente der Schraubenlinie 14 einen Winkel C von -20° einschliesst. In Richtung des Gewindeanfangs 16 gesehen, bildet die Aussparung 20 vor dem Schneidkörper 36 einen Spanraum für abgebautes Bohrmehl aus.

Bei der in der Figur 2C dargestellten Variante der Anordnung eines Schneidkörpers 46 ist dieser gleich wie der Schneidkörper 36 in Fig. 2B ausgerichtet, wobei der von der Aussparung 21 gebildete Spanraum, in Richtung des Gewindeanfangs 16 gesehen, hinter den Schneidkörper 46 zu liegen kommt.

In der Figur 3B sind die entlang des Gewindes 13 nacheinander angeordnete Schneidkörper 56 und 66 zur Schaffung einer Verschränkung im Gewinde 13 unter Einschluss unterschiedlicher Winkel D und E geneigt angeordnet dargestellt. Der Schneidkörper 56 weist eine Längsachse 57 auf, die quer zu der von der Schraubenlinie 14 eingeschlossenen Ebene mit der betreffenden Tangente der Schraubenlinie 14 einen Winkel D von +20° einschliesst. Die Längsachse 67 des Schneidkörpers 66 schliesst quer zu der von der Schraubenlinie 14 eingeschlossenen Ebene mit der betreffenden Tangente der Schraubenlinie 14 einen Winkel E von -15° ein.

## Patentansprüche

1. Schraube (11) mit einem Schaft (12) und mit einem wenigstens bereichsweise umfänglich an dem Schaft (12) angeordneten Gewinde (13), das eine Schraubenlinie (14) definiert, wobei in Aussparungen (20, 21) des Gewindes (13) Schneidkörper (26; 36; 46; 56, 66) aus einem Werkstoff angeordnet sind, dessen Härte grösser als die Härte des Gewindes (13) ist, **dadurch gekennzeichnet, dass**
die Schneidkörper (26; 36; 46) innerhalb und/oder quer zu einer von der Schraubenlinie (14) eingeschlossenen Ebene zur betreffenden Tangente der Schraubenlinie (14) geneigt angeordnet sind, wobei
die Schneidkörper (26; 36; 46; 56, 66) mit einer entlang der Schraubenlinie (14) ausgerichteten Längserstreckung derart ausgerichtet sind, dass ihre Längsachse (27; 37; 47; 57, 67) mit der betreffenden Tangente der Schraubenlinie (14) einen Winkel (A; B; C; D, E) von -35° bis +35° einschliesst.

2. Schraube nach Anspruch 1, **dadurch gekennzeichnet, dass** entlang des Gewindes (13) nacheinander angeordnete Schneidkörper (56, 66) unter Einschluss unterschiedlicher Winkel (D, E) geneigt angeordnet sind.

## Claims

1. Screw (11) comprising a shank (12) and a thread (13) arranged in at least some areas over the circumference of the shank (12) and defining a helix (14), wherein cutting elements (26; 36; 46; 56, 66) made of a material the hardness of which is greater than the hardness of the thread (13) are arranged in recesses (20, 21) in the thread (13), **characterised in that** the cutting elements (26; 36; 46) are arranged within and/or transversely to a plane enclosed by the helix (14) at an inclination to the respective tangents of the helix (14), the cutting elements (26; 36; 46; 56, 66) being oriented to extend longitudinally along the helix (14) in such a manner that their longitudinal axes (27; 37; 47; 57, 67) include an angle (A; B; C; D, E) of - 35° to + 35° with the respective tangents of the helix (14).

2. Screw according to claim 1, **characterised in that** cutting elements (56, 66) arranged one after the other along the thread (13) are arranged at an inclination such that they include different angles (D, E).

## Revendications

1. Vis (11) comportant une tige (12) et au moins un filetage (13) disposé, au moins dans certaines zones, sur la tige (12) de manière circonférentielle, lequel filetage définit une hélice (14), dans laquelle des corps tranchants (26 ; 36 ; 46 ; 56, 66) constitués d'un matériau dont la dureté est supérieure à la dureté du filetage (13) sont disposés dans des évidements (20, 21) du filetage (13), **caractérisée en ce que**
les corps tranchants (26 ; 36 ; 46) sont disposés de manière inclinée par rapport à des tangentes respectives de l'hélice (14) à l'intérieur et/ou transversalement à un plan inclus dans l'hélice (14),
dans laquelle les corps tranchants (26 ; 36 ; 46 ; 56, 66) sont orientés avec une extension longitudinale orientée le long de l'hélice (14) de telle sorte que leur axe longitudinal (27 ; 37 ; 47 ; 57, 67) inclut un angle (A ; B ; C ; D ; E) de - 35 ° à + 35 ° par rapport à la tangente respective de l'hélice (14).

2. Vis selon la revendication 1, **caractérisée en ce que** des corps tranchants (56, 66) sont disposés les uns à côté des autres le long du filetage (13) de manière inclinée en incluant différents angles (D, E).
